# EUROPÄISCHE PATENTSCHRIFT

(11) **EP 0 901 927 B1**
(45) Veröffentlichungstag und Bekanntmachung des Hinweises auf die Patenterteilung: **20.09.2000**
(21) Anmeldenummer: 98113978.5
(22) Anmeldetag: 27.07.1998
(51) Int. Cl.: B60K 15/05

(54) **Tankklappe für Kraftfahrzeuge**
Fuel tank inlet cover for motor vehicles
Trappe d'obturation pour couvrir la tubulure de remplissage pour véhicules automobiles

(30) Priorität: 10.09.1997 DE 19739669
(43) Veröffentlichungstag der Anmeldung: 17.03.1999
(73) Patentinhaber: ED. Scharwächter GmbH, 42855 Remscheid (DE)
(72) Erfinder: Dietl, Armin, 42853 Remscheid (DE); Magnus, Nils, 42859 Remscheid (DE)
(74) Vertreter: Sparing, Rolf Klaus

(56) Entgegenhaltungen:
- US-A- 5 165 749

## Beschreibung

Die Erfindung bezieht sich auf eine Tankklappe für Kraftfahrzeuge, welche in ihrer Schließlage eine einen Tankeinfüllstutzen aufnehmende Mulde in der Fahrzeugkarosserie überdeckt und um eine im Bereich des einen Randes der Karosseriemulde angeordnete Achse schwenkbar angelenkt ist, wobei die Anlenkung der Tankklappe einen an der Fahrzeugkarosserie zu befestigenden Lagerbock und einen vermittels eines Scharnierstiftes schwenkbar an diesem gelagerten, die Tankklappe tragenden Lagerarm sowie eine den Lagerarm belastende, gegen die Karosserie abgestützte Druckfeder umfaßt und wobei die Tankklappe lösbar an dem Lagerarm befestigt ist.

Im Rahmen der modernen Fertigung von Kraftfahrzeugkarosserien werden am Karosseriekörper schwenkbar angelenkte Klappen oder Deckel zum Verschluß von Zugangsöffnungen im Karosserieraum im allgemeinen in die Rohkarosserie einjustiert und montiert und sodann zusammen mit der Karosserie lackiert, wobei im Zuge des Einjustierens zum einen die zur umgebenden Karosserieaußenwand fluchtende Ausrichtung und zum anderen die Ausrichtung bezüglich der die jeweilige Zugangsöffnung umgebenden Karosserieränder vorgenommen und festgelegt wird. Diese Verfahrensweise wird auch bei Tankklappen angewandt, in der Weise, daß die Tankklappe jeweils zum Spalt mit der umgebenden Karosseriewandung hin justiert wird, wobei eine umlaufend gleiche Spaltbreite angestrebt wird.. Bei Tankklappen ist es aber zudem aus konstruktiven Gründen in vielen Fällen notwendig, daß die Anlenkachse der Tankklappe sehr nahe dem Spalt zwischen Karosserie und Tankklappe liegt. In diesen Fällen kann es zu Problemen beim Lackieren der Karosserie kommen, insbesondere dahingehend, daß entweder die den Tankstutzen aufnehmende Karosseriemulde oder aber der Randbereich der Tankklappe im Bereich deren Anlenkung an der Karosserie nicht oder nur unzureichend lakkiert bzw. mit Lack überzogen werden. Aus diesen Gründen ist durch die gattungsbildende US-A 5 165 749 bereits eine lösbare Befestigung der Tankklappe an dem sie tragenden Lagerarm vorgeschlagen worden, wobei die dort vorgesehene Befestingseinrichtung zum einen verhältnismäßig aufwendig gestaltet ist und zum anderen keine Hilfsmittel zum wiederholbaren lagenrichtigen Verbinden der Tankklappe mit dem sie tragenden Lagerarm aufweist, was eine verhältnismäßig großen Zeitaufwand für das Wiederbefestigen der Tankklappe nach dem Lakkieren der Fahrzeugkarosserie am Lagerarm erfordert.

Der Erfindung liegt daher die Aufgabe zugrunde, eine Tankklappe der eingangs bezeichneten Bauart für Kraftfahrzeuge dahingehend weiter zu verbessern, daß bei geringstem Aufwand an Montagezeit auch bei Tankklappen, deren Schwenklagerung sehr nahe dem Spalt zwischen Karosserie und Tankklappe liegt, eine einwandfreie Lackierung der Fahrzeugkarosserie ermöglicht wird.

Diese Aufgabe wird erfindungsgemäß im Wesentlichen dadurch gelöst, daß eine aus wenigstens einer an der Tankklappe angeordneten und mit einem komplementären Gegenstück am Lagerarm zusammenwirkende Ausrichtmarke bestehende Einrichtung zum wiederholbaren lagenrichtigen Befestigen der Tankklappe am Lagerarm vorgesehen ist.
Dies ermöglicht es, nicht nur die Tankklappe während des Lackierens von der Karosserie abzunehmen, so daß auch bei engsten Spaltverhältnissen zwischen Karosseriemulde und Tankklappe beide Teile vollständig und einwandfrei lackiert werden können, sondern ermöglicht ferner auch ein einfaches lagenrichtiges Wiederansetzen der Tankklappe an den sie tragenden Lagerarm.

Eine insbesondere für solche Karosserieformen, bei denen ein besonders kleiner Spalt zwischen Tankklappe und Karosseriemulde vorgesehen ist, bestimmte und bevorzugte Verwirklichungsform der Erfindung sieht ferner vor, daß die lösbare Befestigung der Tankklappe an dem Lagerarm ein senkrecht zur Ebene der Tankklappe ausgerichtetes, bleibend mit der Tankklappe verbundenes Befestigungselement umfaßt. Daraus resultiert, daß die Tankklappe nach dem Lackieren in einer senkrecht zur Ebene der umgebenden Karosseriewandung ausgerichteten Bewegungsrichtung mit dem Lagerarm verbunden wird, so daß die beim Lackieren auf die Tankklappe und den Lagerarm aufgetragenen Lackschichten zwar allenfalls zu einer geringfügigen Änderung der Fluchtungslage der Tankklappe gegenüber der umgebenden Karosserieoberfläche, keinesfalls aber zu einer unsymetrischen bzw. einseitigen Veränderung des umlaufenden Spaltes zwischen Karosseriemulde und Tankklappe führen können. Da bei paralleler Lage eine geringfügige Änderung der Höhenlage der Tankklappe zur umgebenden Karosserieoberfläche optisch kaum wahrnehmbar ist, bildet die bevorzugte Verwirklichungsform der Erfindung eine optimale Lösung der eingangs aufgezeigten Problematik.

Eine wenig aufwendige und einfach zu montierende Gestaltungsform einer Befestigungseinrichtung für die Tankklappe am Lagerarm besteht dabei darin, daß die lösbare Befestigung der Tankklappe einerseits eine Bohrungsausnehmung im Lagerarm und andererseits einen senkrecht zur Ebene der Tankklappe ausgerichteten, bleibend an dieser befestigten Gewindezapfen mit zugehöriger Mutter umfaßt. Selbstverständlich kann die Befestigungseinrichtung auch durch jedes andere zur Anordnung in einer senkrecht zur Ebene der Tankklappe ausgerichteten Stellung geeignete Befestigungselement gebildet sein.

Die Einrichtung zum wiederholbaren Befestigen der Tankklappe in der ihrer ursprünglich, d.h. in der Rohkarosserie, ausgerichteten Lage entsprechenden Lage am Lagerarm umfaßt grundsätzlich in einer zum Befestigungselement parallelen Ausrichtung miteinander zusammenwirkende Elemente, insbesondere an Tankklappe und Lagerarm wechselweise ausgebildete Vorsprünge und Ausnehmungen, kann im Übrigen aber jede beliebige und geeignete Gestalt aufweisen.

In einer bevorzugten Ausführungsform ist dabei vorgesehen, daß die Einrichtung zum wiederholbaren lagenrichtigen Befestigen der Tankklappe am Lagerarm insgesamt drei Ausrichtmarken umfaßt, wobei die insgesamt drei Ausrichtmarken vorzugsweise in den Eckpunkten eines, bei besonders vorteilhafter Anordnung gleichschenkeligen Dreieckes angeordnet sind.

Im Einzelnen kann dabei weiter vorgesehen sein daß zwei einander gegenüberliegende Ausrichtmarken in einer zu einem der Ränder der Tankklappe parallel ausgerichteten Linie und vorzugsweise in einer zur Schwenkachse des Lagerarmes parallel ausgerichteten Grundlinie des gleichschenkeligen Dreieckes angeordnet sind.

Unabhängig von ihrer Verteilung in der Fläche empfiehlt es sich, daß die Ausrichtmarken jeweils aus einem an der Tankklappe und einem an dem Lagerarm wechselweise angeordneten Vorsprüngen und Ausnehmungen bestehen und eine Schwenklagerpaarung bildende räumliche Krümmung aufweisen, so daß die Ausrichtmarken beim Anziehen des Befestigungselementes eine selbstzentriende und bezüglich der Tankklappe eine ausrichtende Wirkung entfalten.

Innerhalb des vorstehend aufgezeigten Rahmens kann hinsichtlich der Raumform der Ausrichtmarken vorgesehen sein, daß wenigstens eine der Ausrichtmarken aus kalottenförmiger Aufnahme und kugelsegmentförmigem Vorsprung und/oder wenigstens eine der Ausrichtmarken aus einem kegelförmigen Vorsprung und einer komplementär geformten Aufnahme besteht. Ferner oder alternativ kann aber auch vorgesehen sein, daß wenigstens eine der Ausrichtmarken aus einem Prima und einer Kugel besteht.

Schließlich ist nach einer besonderen Verwirklichungsform der Erfindung vorgesehen, daß insgesamt drei Ausrichtmarken auf die Eckpunkte eines gleichschenkeligen Dreieckes verteilt und die durch einen Gewindebolzen gebildete Befestigungseinrichtung im Zentrum dieses Dreieckes angeordnet sind, und zwar derart, daß zwei der Ausrichtmarken in der zur Schwenkachse des Lagerarmes parallelen Grundlinie und die dritte Ausrichtmarke in der zum freien Ende der Tankklappe hin zeigenden Spitze des Dreieckes angeordnet sind, wobei eine am unteren Ende der Grundlinie des Dreieckes angeordnete, eine Hauptzentrieung bildende Ausrichtmarke aus einem kegelförmigen Vorsprung und einer kugelförmigen Aufnahme und eine am oberen Ende der Grundlinie des Dreieckes angeordnete, eine erste Nebenzentrierung bildende Ausrichtmarke aus einem Prisma und einer Kugel sowie eine dritte an der spitze des Dreieckes angeordnete, eine zweite Nebenzentrierung bildende Ausrichtmarke aus einem Kugelsegment und einer Kalotte bestehen.

Die Erfindung ist in der nachfolgenden Beispielsbeschreibung anhand eines in der Zeichnung dargestellten Ausführungsbeispieles im Einzelnen beschrieben. In der Zeichnung zeigt die
Figur 1 eine schaubildliche Darstellung einer Tankklappe samt ihrer Anlenkung;
Figur 2 einem Schnitt durch die Tankklappe gemäß Figur 1 entlang der Linie II-II.
Figur 3 einem Schnitt durch die Tankklappe gemäß Figur 1 entlang der Linie III-III.

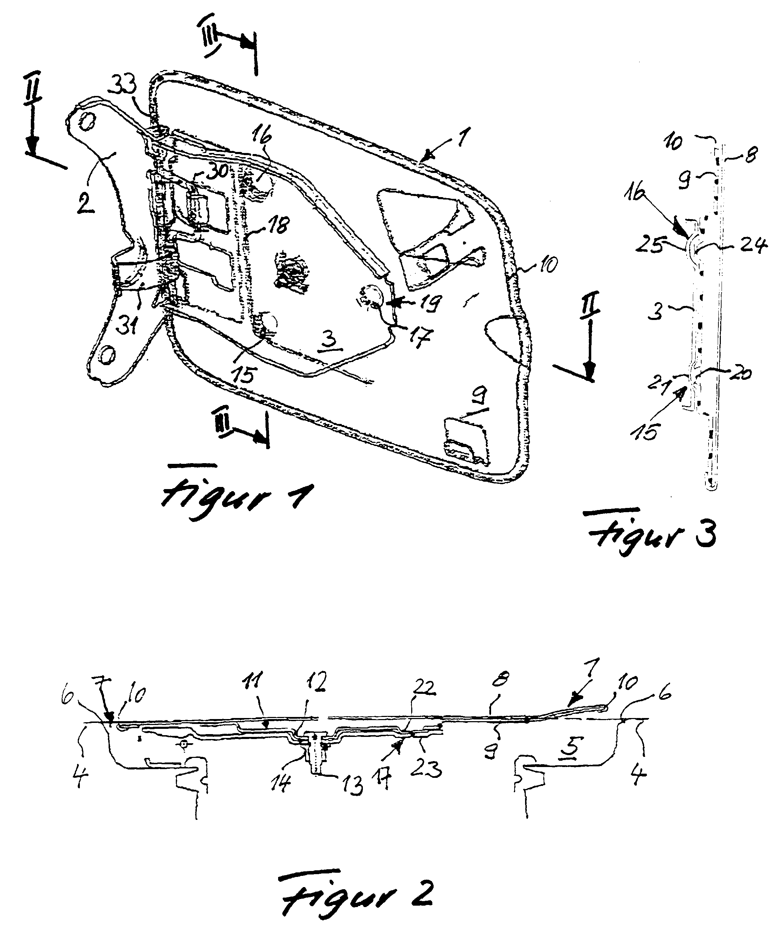

Eine in ihrer Gesamtheit mit 1 bezeichnete Tankklappe ist vermittels eines Lagerbockes 2 und eines mit diesem über Scharnierstift 33 schwenkbar verbundenen Lagerarm 3 an einer Fahrzeugkarosserie 4 angelenkt und zwar derart, daß sie in ihrer Schließlage eine in der Fahrzeugkarosserie 4 ausgebildete Mulde 5 übergreift. Wie insbesondere aus der Darstellung der Figur 2 ersichtlich schließt die in ihrer Schließlage befindliche Tankklappe 1 mit dem Umfangsrand 6 der Mulde 5 umlaufend einen schmalen Spalt 7 ein. Die Tankklappe 1 ist ferner mit einer gegen die Fahrzeugkarosserie 4 abgestützten und an einem als Kurbelarm 30 ausgebildeten Längenabschnitt des Scharnierstiftes 33 angreifenden, als Blattfeder ausgebildeten Feder 31 beaufschlagt. Die Tankklappe 1 selbst besteht aus einer glattflächigen Außenhaut 8 und einem dieser zugeordneten durch ein geprägtes Blechformteil gebildeten Einlegeteil 9, über welches sie sich mit dem Lagerarm 3 in Anlage befindet. Die Außenhaut 8 der Tankklappe ist in der gezeigten Ausführungsform mittels Bördelung 10 mit dem Einlegeteil 9 verbunden. Das Einlegeteil 9 weist in seinem mittleren Bereich eine zur Fahrzeugkarosserie 4 hin gerichtete Ausformung 11 auf, die mit einem Vorsprung 12 versehen ist, in welchen ein ein Befestigungselement zur Verbindung der Tankklappe mit dem Lagerarm bildender Schraubenbolzen 13 befestigt ist. Der Schraubenbolzen 13 durchgreift eine Bohrungsausnehmung im Lagerarm und ist an diesem mittels einer Mutter 14 verschraubt. Dem Vorsprung 12 ist eine komplementäre Vertiefung im Lagerarm 3 zugeordnet.
Zum wiederholbaren Trennen und Anbauen der Tankklappe in einer bezüglich einer einmal einjustierten Lage lagenrichtig ausgerichteten Lage am Lagerarm sind insgesamt drei Ausrichtmarken 15, 16 und 17 vorgesehen, die auf die Eckpunkte eines gleichschenkeligen Dreieckes, in dessen Zentrum die durch einen Gewindebolzen gebildete Befestigungseinrichtung angeordnet ist, verteilt angeordnet sind. Wie insbesondere aus der Darstellung der Figur 1 ersichtlich, ist die Anordnung weiterhin derart getroffen, daß zwei Ausrichtmarken 15, 16 in der zur Schwenkachse 33 des Lagerarmes 3 parallelen Grundlinie 18 und die dritte Ausrichtmarke 17 in der zum freien Ende der Tankklappe hin zeigenden Spitze 19 des Dreieckes angeordnet sind. Dabei bildet die am unteren Ende der Grundlinie 18 des Dreieckes angeordnete Ausrichtmarke 15 die Hauptzentrierung der Tankklappe am Lagerarm. Die Ausrichtmarke 15 besteht aus einem am Einlegeteil 9 ausgeprägten kegelförmigen Vorsprung 20 und einer kugelförmigen Aufnahme 21 im Lagerarm 3. Die am oberen Ende der Grundlinie 18 des Dreieckes angeordnete, eine erste Nebenzentrierung bildende Ausrichtmarke 16 besteht aus einem am Einlegeteil 9 ausgeprägten Prisma 24 und einer im Lagerarm vorgesehenen Kugel 25. Die dritte an der Spitze 19 es Dreieckes angeordnete, eine zweite Nebenzentrierung bildende Ausrichtmarke 17 besteht aus einem am Einlegeteil 9 ausgeprägten Kugelsegment 22 und einer im Lagerarm ausgebildeten Kalotte 23. Bei dieser Anordnung und Ausbildung der Ausrichtmarken 15, 16, 17 ist die Tankklappe an der die Hauptzentrierung bildenden Ausrichtmarke 15 in sämtlichen Richtungen, d.h. in "X-", Y-"' und "Z-Richtung festgelegt und zwar derart, daß sie in Verbindung mit ihrer Festlegung an der die erste Nebenzentrierung bildenden Ausrichtmarke 16 nur noch einen Freiheitsgrad besitzt und im Sinne einer Schwenkbeweglichkeit um eine in der Grundlinie 18 des Dreieckes liegende Achse. Durch die die zweite Nebenzentrierung bildende Ausrichtmarke ist die Tankklappe dann endgültig in einer genau definierten Lage ausgerichtet.

## Patentansprüche

1. Tankklappe (1) für Kraftfahrzeuge, welche in ihrer Schließlage eine einen Tankeinfüllstutzen aufnehmende Mulde (5) in der Fahrzeugkarosserie überdeckt und um eine im Bereich des einen Randes der Karosseriemulde angeordnete Achse schwenkbar angelenkt ist, wobei die Anlenkung der Tankklappe einen an der Fahrzeugkarosserie zu befestigenden Lagerbock (2) und einen vermittels eines Schamierstiftes (33) schwenkbar an diesem gelagerten, die Tankklappe tragenden Lagerarm (3) sowie eine den Lagerarm belastende, gegen die Karosserie abgestützte Druckfeder (31) umfaßt und wobei die Tankklappe lösbar an dem Lagerarm befestigt ist
dadurch gekennzeichnet,
daß in Verbindung mit einer ein bleibend mit der Tankklappe verbundenes Befestigungselement umfassenden lösbaren Befestigung der Tankklappe mit dem Lagerarm (3) eine aus wenigstens einer an der Tankklappe angeordneten und mit einem komplementären Gegenstück am Lagerarm zusammenwirkende Ausrichtmarke (15, 16, 17) bestehende Einrichtung zum wiederholbaren lagenrichtigen Befestigen der Tankklappe am Lagerarm vorgesehen ist.

2. Tankklappe nach Anspruch 1, dadurch gekennzeichnet, daß die lösbare Befestigung der Tankklappe an dem Lagerarm wenigstens ein senkrecht zur Ebene der Tankklappe ausgerichtetes, bleibend mit der Tankklappe verbundenes Befestigungselement umfaßt.

3. Tankklappe nach Anspruch 1 und 2, dadurch gekennzeichnet, daß die lösbare Befestigung der Tankklappe an dem Lagerarm einen senkrecht zur Ebene der Tankklappe ausgerichteten, bleibend an dieser befestigten Gewindebolzen (13) mit zugehöriger Mutter umfaßt.

4. Tankklappe nach Anspruch 1 bis 3, dadurch gekennzeichnet, daß die Einrichtung zum wiederholbaren lagenrichtigen Befestigen der Tankklappe am Lagerarm insgesamt drei Ausrichtmarken (15, 16, 17) umfaßt.

5. Tankklappe nach Anspruch 4, dadurch gekennzeichnet, daß die insgesamt drei Ausrichtmarken in den Eckpunkten eines, insbesondere gleichschenkeligen Dreieckes angeordnet sind.

6. Tankklappe nach einem der Ansprüche 1 bis 5, dadurch gekennzeichnet, daß zwei einander gegenüberliegende Ausrichtmarken (15, 16) in einer zur Schwenkachse des Lagerarmes parallel ausgerichteten Grundlinie (18) des gleichschenkeligen Dreieckes angeordnet sind.

7. Tankklappe nach einem der Ansprüche 1 bis 6, dadurch gekennzeichnet, daß die Ausrichtmarken jeweils aus einem an der Tankklappe und einem an dem Lagerarm wechselweise angeordneten Vorsprüngen und Ausnehmungen bestehen und eine eine Schwenklagerpaarung bildende räumliche Krümmung aufweisen.

8. Tankklappe nach einem der Ansprüche 1 bis 7, dadurch gekennzeichnet, daß wenigstens eine der Ausrichtmarken jeweils aus kalottenförmiger Aufnahme und kugelsegmentförmigem Vorsprung besteht.

9. Tankklappe nach einem der Ansprüche 1 bis 8, dadurch gekennzeichnet, daß wenigstens eine der Ausrichtmarken aus einem kegelförmigen Vorsprung und einer komplementär geformten Aufnahme besteht.

10. Tankklappe nach einem der Ansprüche 1 bis 9, dadurch gekennzeichnet, daß wenigstens eine der Ausrichtmarken aus zwei wechselweise an der Tankklappe und am Lagerarm ausgebildeten und zueinander komplementär ausgerichteten Flächen besteht.

11. Tankklappe nach einem der Ansprüche 1 bis 10, dadurch gekennzeichnet, daß insgesamt drei Ausrichtmarken auf die Eckpunkte eines gleichschenkeligen Dreieckes verteilt und die durch einen Gewindebolzen (13) gebildete Befestigungseinrichtung im Zentrum dieses Dreieckes angeordnet sind, und zwar derart, daß zwei der Ausrichtmarken (15, 16) in der zur Schwenkachse des Lagerarmes parallelen Grundlinie (18) und die dritte Ausrichtmarke in der zum freien Ende der Tankklappe hin zeigenden Spitze des Dreieckes angeordnet sind, wobei eine am unteren Ende der Grundlinie des Dreieckes angeordnete, eine Hauptzentrierung bildende Ausrichtmarke aus einem kegelförmigen Vorsprung und einer kugelförmigen Aufnahme und eine am oberen Ende der Grundlinie des Dreieckes angeordnete, eine erste Nebenzentrierung bildende Ausrichtmarke aus einem Prisma und einer Kugel sowie eine dritte an der Spitze des Dreieckes angeordnete, eine zweite Nebenzentrierung bildende Ausrichtmarke aus einem Kugelsegment und einer Kalotte bestehen.

## Claims

1. Fuel tank inlet cover (1) for motor vehicles, which in its closed position covers a recess (5) in the vehicle body receiving a tank filler socket and is pivoted about a pin located in the region of one edge of the recess in the body, the pivot for the fuel tank inlet cover comprising a bearing bracket (2) to be fastened to the vehicle body and a bearing arm (3) mounted to tilt on the former by means of a hinge pin (33) and supporting the fuel tank inlet cover as well as a compression spring (31) loading the bearing arm and supported against the body and the fuel tank inlet cover being releasably fastened to the bearing arm, characterised in that provided in conjunction with a releasable attachment of the fuel tank inlet cover to the bearing arm (3), comprising a fastening member permanently connected to the fuel tank inlet cover is a device for repeated fastening of the fuel tank inlet cover in the correct position to the bearing arm, said device consisting of at least one alignment mark (15, 16, 17) located on the fuel tank inlet cover and cooperating with a complementary counter-member on the bearing arm.

2. Fuel tank inlet cover according to Claim 1, characterised in that the releasable fastening of the fuel tank inlet cover to the bearing arm comprises at least one fastening member aligned at right angles to the plane of the fuel tank inlet cover and permanently connected to the fuel tank inlet cover.

3. Fuel tank inlet cover according to Claims 1 and 2, characterised in that the releasable fastening of the fuel tank inlet cover to the bearing arm comprises a threaded bolt (13) with associated nut, aligned at right angles to the plane of the fuel tank inlet cover and permanently attached thereto.

4. Fuel tank inlet cover according to Claims 1 to 3, characterised in that the device for the repeated fastening in the correct position of the fuel tank inlet cover on the bearing arm comprises a total of three alignment marks (15, 16, 17).

5. Fuel tank inlet cover according to Claim 4, characterised in that the total of three alignment marks are arranged in the corners of a triangle in particular an equilateral triangle.

6. Fuel tank inlet cover according to one of Claims 1 to 5, characterised in that two alignment marks (15, 16) located opposite each other are located in a base line (18) of the equilateral triangle, which base line is aligned parallel with the pivot pin of the bearing arm.

7. Fuel tank inlet cover according to one of Claims 1 to 6, characterised in that the alignment marks consist respectively of projections and recesses arranged alternately on the fuel tank inlet cover and on the bearing arm and comprise a spatial curvature forming a swivel bearing pair.

8. Fuel tank inlet cover according to one of Claims 1 to 7, characterised in that at least one of the alignment marks consists respectively of a spherical recess and projection in the form of a spherical segment.

9. Fuel tank inlet cover according to one of Claims 1 to 8, characterised in that at least one of the alignment marks consists of a conical projection and a recess having a complementary shape.

10. Fuel tank inlet cover according to one of Claims 1 to 9, characterised in that at least one of the alignment marks consists of two surfaces constructed alternately on the fuel tank inlet cover and on the bearing arm and aligned in a complementary manner with respect to each other.

11. Fuel tank inlet cover according to one of Claims 1 to 10, characterised in that in all three alignment marks are distributed at the corners of an equilateral triangle and the fastening device formed by a threaded bolt (13) is located in the centre of this triangle and indeed so that two of the alignment marks (15, 16) are located in the base line (18) parallel to the swivel axis of the bearing arm and the third alignment mark is located in the apex of the triangle pointing towards the free end of the fuel tank inlet cover, in which case an alignment mark located at the lower end of the base line of the triangle and forming main centering means consists of a conical projection and a spherical recess and an alignment mark located at the upper end of the base line of the triangle and forming a first additional centering means consists of a prism and a sphere and a third alignment mark located at the apex of the triangle and forming second additional centering means consists of a spherical segment and a spherical indentation.

## Revendications

1. Trappe de réservoir **(1)** pour véhicule, qui recouvre dans sa position fermée une cavité **(5)** de la carrosserie du véhicule recevant un embout de remplissage de réservoir et qui est articulée de manière pivotante autour d'un axe placé au niveau d'un bord de la cavité de carrosserie, l'articulation de la trappe de réservoir comprenant un support **(2)** se fixant à la carrosserie du véhicule et un bras de soutien **(3)** se montant sur celui-ci de manière pivotante au moyen d'une cheville de charnière **(33)** et portant la trappe de réservoir, ainsi qu'un ressort de compression **(31)** appuyé contre la carrosserie et agissant sur le bras de soutien, et la trappe de réservoir étant fixée de manière amovible au bras de soutien,
caractérisée en ce que
en liaison avec une fixation amovible de la trappe de réservoir au bras de soutien **(3)** comprenant un élément de fixation relié en permanence à la trappe de réservoir, un dispositif composé d'au moins une marque d'alignement **(15, 16, 17)** placée sur la trappe de réservoir et coopérant avec une pièce complémentaire sur le bras de soutien est prévu pour fixer de manière reproductible en position correcte la trappe de réservoir sur le bras de soutien.

2. Trappe de réservoir selon la revendication 1, caractérisé en ce que la fixation amovible de la trappe de réservoir sur le bras de soutien comprend au moins un élément de fixation orienté perpendiculairement au plan de la trappe de réservoir et relié en permanence à la trappe de réservoir.

3. Trappe de réservoir selon la revendication 1 et 2, caractérisée en ce que la fixation amovible de la trappe de réservoir sur le bras de soutien comprend une tige filetée **(13)** orientée perpendiculairement au plan de la trappe de réservoir et fixée de manière permanente à celle-ci, avec son écrou associé.

4. Trappe de réservoir selon l'une des revendications 1 à 3, caractérisée en ce que le dispositif de fixation reproductible en position correcte de la trappe de réservoir sur le bras de soutien comprend au total trois marques d'alignement **(15, 16, 17).**

5. Trappe de réservoir selon la revendication 4, caractérisée en ce que les marques d'alignement au nombre de trois au total sont placées dans les angles d'un triangle, en particulier d'un triangle équilatéral.

6. Trappe de réservoir selon l'une des revendications 1 à 5, caractérisée en ce que deux marques d'alignement mutuellement opposées **(15, 16)** sont placées sur une ligne de base **(18)** du triangle équilatéral orientée parallèlement à l'axe de pivotement du bras de soutien.

7. Trappe de réservoir selon l'une des revendications 1 à 6, caractérisée en ce que les marques d'alignement se composent à chaque fois d'une saillie et d'un évidement placés en alternance sur la trappe de réservoir et sur le bras de soutien, et présentent une courbure spatiale formant un accouplement à palier pivotant.

8. Trappe de réservoir selon l'une des revendications 1 à 7, caractérisée en ce qu'au moins l'une des marques d'alignement se compose à chaque fois d'un logement en forme de calotte et d'une saillie en forme de segment sphérique.

9. Trappe de réservoir selon l'une des revendications 1 à 8, caractérisée en ce qu'au moins l'une des marques d'alignement se compose d'une saillie conique et d'un logement de forme complémentaire.

10. Trappe de réservoir selon l'une des revendications 1 à 9, caractérisée en ce qu'au moins l'une des marques d'alignement se compose de deux surfaces formées en alternance sur la trappe de réservoir et le bras de soutien et orientées de manière mutuellement complémentaire.

11. Trappe de réservoir selon l'une des revendications 1 à 10, caractérisée en ce qu'au total trois marques d'alignement sont réparties dans les angles d'un triangle équilatéral et le dispositif de fixation formé d'une tige filetée **(13)** est placé au centre de ce triangle, de telle manière que deux des marques d'alignement **(15, 16)** soient placées sur la ligne de base **(18)** parallèle à l'axe de pivotement du bras de soutien et la troisième marque d'alignement soit placée sur le sommet du triangle pointé dans la direction de l'extrémité libre de la trappe de réservoir, dans laquelle une marque d'alignement placée à l'extrémité inférieure de la ligne de base du triangle et formant le centrage principal se compose d'une saillie conique et d'un logement sphérique et une marque d'alignement placée à l'extrémité supérieure de la ligne de base du triangle et formant un premier centrage secondaire se compose d'un prisme et d'une boule, et une troisième marque d'alignement placée au sommet du triangle et formant un deuxième centrage secondaire se compose d'un segment sphérique et d'une calotte.
